# EUROPÄISCHE PATENTSCHRIFT

(11) **EP 3 879 163 B1**
(45) Veröffentlichungstag und Bekanntmachung des Hinweises auf die Patenterteilung: **29.05.2024**
(21) Anmeldenummer: 20162689.2
(22) Anmeldetag: 12.03.2020
(51) Int. Cl.: F16L 55/11, B25H 7/04, B25H 7/00

(54) **VERFAHREN ZUR MARKIERUNG EINES ROHRS MIT EINEM VERSCHLUSSSTOPFEN**
METHOD OF MARKING A PIPE WITH A SEALING STOPPER
PROCÉDURE DE MARQUAGE D'UN TUYAU AVEC UN BOUCHON D'OBTURATION

(43) Veröffentlichungstag der Anmeldung: 15.09.2021
(73) Patentinhaber: Geberit International AG, 8645 Jona (CH)
(72) Erfinder: RÖST, Andreas, 8645 Jona (CH)
(74) Vertreter: Frischknecht, Harry Ralph

(56) Entgegenhaltungen:
- CH-B1- 716 372
- IT-A1- UB20 155 084
- NL-C2- 2 001 686
- US-A- 5 622 208
- US-A1- 2016 008 965
- US-B1- 6 360 779

## Beschreibung

### TECHNISCHES GEBIET

Die vorliegende Erfindung betrifft ein Verfahren nach dem Oberbegriff von Anspruch 1.

### STAND DER TECHNIK

Aus dem Stand der Technik ist es bekannt, Rohre mit Schutzdeckeln oder Verschlussstopfen zu versehen. Die Verschlussstopfen verschliessen das Rohr, so dass vor der Installation des Rohrs kein Schmutz in das Rohr gelangen kann. Gerade bei Rohren für die Trinkwasserversorgung ist es äusserst wichtig, dass die Verschlussstopfen während des Transports in den Rohren verbleiben, so dass ein Eindringen von Schmutz in der Logistikkette verhindert werden kann. Die Dokumente IT UB20155084 A1, US 5622208 A, NL 2001686 C2 und US 6360779 B1 zeigen Rohre mit Schutzdeckeln.

Weiter muss der Verschlussstopfen aber durch den Installateur möglichst einfach vom Rohr getrennt werden können, so dass die Rohrinstallation auf der Baustelle effizient ausgeführt werden kann. Typischerweise werden an den Rohrenden Fittings angebracht, mit welchen das Rohr mit weiteren Rohren oder mit Armaturen verbunden werden kann.

Ein weiteres optionales Erfordernis ist in gewissen Anwendungsfällen auch, dass ein Verschlussstopfen wieder einfach mit einem Rohr verbunden werden kann.

Nach Entfernen des Verschlussstopfens markiert der Installateur die Einstecktiefe eines Fittings auf der Aussenseite des Rohrs. Hierzu nimmt er ein Massstab oder ein Klappmeter zur Hilfe. Dabei bringt der Installateur mit einem Stift die Markierung an der vom Fittinghersteller angegebenen Einstecktiefe an. Anschliessend kann der Fitting bis auf die Markierung eingesteckt und mit dem Rohr verpresst werden. Für viele Installateure ist das beschriebene Anbringen einer Markierung zu mühsam und sie sind in der Praxis dazu übergegangen, auf die Markierung zu verzichten, was zu Fehlern in der Einstecktiefe bei der Montage führt. Das Dokument US 2016008965 A1 offenbart Markierungslehren für Rohre.

### DARSTELLUNG DER ERFINDUNG

Ausgehend von diesem Stand der Technik liegt der Erfindung eine Aufgabe zugrunde, einen Verschlussstopfen zum Verschliessen eines Rohrs anzugeben, welcher die Nachteile des Standes der Technik überwindet. Insbesondere liegt der Erfindung eine Aufgabe zugrunde, ein Verfahren anzugeben, welche das Anbringen einer Markierung für die Einstecktiefe eines Fittings vereinfacht.

Diese Aufgabe löst das Verfahren nach Anspruch 1. Demgemäss umfasst ein Verschlussstopfen zum Verschliessen eines Rohrs einen sich um eine Mittelachse herumerstreckenden Stopfenabschnitt mit mindestens einem Rückhalteelement. Der Verschlussstopfen ragt mit dem Stopfenabschnitt im mit dem Rohr verbundenen Zustand in das Rohr ein und verschliesst die Rohröffnung. Mit dem mindestens einen Rückhalteelement ist eine kraftschlüssige Verbindung zwischen Verschlussstopfen und der Rohrinnenseite bereitstellbar.

Weiter weist der Verschlussstopfen weiterhin eine Markierungslehre auf, mit welcher eine Markierung, insbesondere für die Einstecktiefe eines Fittings, an der Rohraussenseite anbringbar ist.

Gemäss dem Verfahren zum Anbringen einer Markierung auf der Rohraussenseite eines Rohrs mit einem Verschlussstopfen nach obiger Beschreibung, wird in einem ersten Schritt der Verschlussstopfen aus dem Rohr herausgezogen, wobei in einem nachfolgenden Schritt der Verschlussstopfen mit der Markierungslehre am Rohr positioniert wird, und wobei in einem nachfolgenden Schritt eine Markierung basierend auf der Markierungslehre angebracht wird.

Durch die Anordnung einer Markierungslehre am Verschlussstopfen wird dem Installateur ein sehr einfach zu bedienendes Element an die Hand gegeben. Nach Entfernen des Verschlussstopfens kann der Installateur den herausgezogenen Verschlussstopfen direkt für das Anzeichnen der Markierung einsetzen. Dadurch wird die Arbeit des Installateurs vereinfacht, weil der Installateur auf eine feste Markierungslehre zurückgreifen kann. Weiter wird der Schritt des Anzeichnens sicherer. Sofern mit der Markierungslehre die Einstecktiefe für einen Fitting angezeichnet wird, ergeht zudem der Vorteil, dass das falsche Anzeichnen von der Einstecktiefe vermieden werden kann, wodurch die Fittings insgesamt verbessert positioniert werden können, was die Fittingverbindung insgesamt verbessert und Fehlverbindungen aufgrund falscher Positionierung vermieden werden können.

Vorzugsweise weist die Markierungslehre eine Anzeichnungskante auf, wobei die Anzeichnungskante derart ausgebildet ist, dass eine Stiftspitze an der Anzeichnungskante positionierbar ist. Die Anzeichnungskante kann Teil einer Öffnung sein. Alternativ kann die Anzeichnungskante auch als freie Kante ausgebildet sein.

Vorzugsweise weist die Markierungslehre eine Anschlagsfläche auf, mit welcher die Markierungslehre an die Frontfläche des Rohrs anlegbar ist, wobei die Anschlagsfläche in einem Abstand beabstandet zur Anzeichnungskante liegt. Durch die Anschlagsfläche kann der Installateur den Verschlussstopfen für den Zweck des Anbringens der Markierung an einer determinierten Lage am Rohr positionieren.

Vorzugsweise steht von der Anschlagsfläche eine Führungsnocke ab, welche beim Vorgang der Markierung mit der Rohrinnenseite in Kontakt bringbar ist. Über die Führungsnocke wird der Verschlussstopfen am Rohr geführt und der Verschlussstopfen kann einfach um das Rohr herum bewegt werden.

Vorzugsweise weist die Markierungslehre eine Führungsfläche auf, mit welcher die Markierungslehre an der Rohraussenseite anlegbar ist. Die Führungsfläche ist vorzugweise konkav gerundet. Der Radius der konkaven Rundung entspricht vorzugsweise im Wesentlichen dem Radius der Rohraussenseite.

Vorzugsweise ist die Markierungslehre im Bereich des Frontabschnitts angeordnet. Diese Variante hat den Vorteil, dass der zusätzliche Materialbedarf für die Markierungslehre sehr gering gehalten werden kann.

Alternativerweise kann sich die Markierungslehre auch dem Stopfenabschnitt anschliessen, wobei die Markierungslehre in das Rohr hineinragt, wenn der Verschlussstopfen ins Rohr eingesetzt ist. Dies Variante hat den Vorteil, dass die Markierungslehre vor dem Anzeichnen durch das Rohr vor äusseren Einflüssen geschützt ist.

Vorzugsweise umfasst der Verschlussstopfen am Frontabschnitt ein Laschenelement, wobei das Laschenelement im mit dem Rohr verbundenen Zustand frei zugänglich ist, derart, dass das Laschenelement durch einen Installateur ergreifbar ist und dass der Verschlussstopfen mit dem Laschenelement aus dem Rohr herausziehbar ist.

Mit dem Laschenelement wird dem Installateur ein Element bereitgestellt, welches ein einfaches Herausziehen des Verschlussstopfens aus dem Rohr erlaubt. Der Installateur ergreift dabei das Laschenelement und zieht den Verschlussstopfen am Laschenelement aus dem Rohr. Durch das Laschenelement ist der Einsatz einer Zange oder einem ähnlichen Werkzeug nicht nötig.

Vorzugsweise ist das Laschenelement von einer Ausgangslage, in welcher das Laschenelement an einer Stirnfläche des Frontabschnitts anliegt, in eine Betätigungslage, in welcher das Laschenelement von der Stirnfläche wegragt, wegbiegbar.

Dadurch, dass das Laschenelement an der Stirnfläche anliegt, steht dieses in der Ausgangslage auch nicht vom Verschlussstopfen ab, was den Vorteil aufweist, dass beim Transport des Rohrs, das Laschenelement nicht an anderen Elementen ein- oder verhaken kann, wodurch es zu einem zufälligen Ausreissen des Verschlussstopfens kommen könnte.

Die Stirnfläche ist im Wesentlichen rechtwinklig zur Mittelachse des Verschlussstopfens orientiert.

Vorzugsweise ist das Laschenelement über mindestens eine mit einer Sollbruchstelle ausgebildeten Verbindung mit dem Frontabschnitt verbunden, wobei die mindestens eine Sollbruchstelle vor dem Herausziehen des Verschlussstopfens auftrennbar ist. Das heisst mit anderen Worten, dass die Sollbruchstelle der Verbindung bei der Bewegung von der Ausgangslage in die Betätigungslage durch den Installateur aufgebrochen wird.

Durch die Anordnung dieser Verbindung ergeht der Vorteil, dass die Lage des Laschenelements vor dem Vorgang des Herausziehens zum Verschlussstopfen gesichert ist. Hierdurch kann dem aus dem Rohr herausragenden Teil des Verschlussstopfens eine kompakte Struktur gegeben werden, was das Risiko eines Einhakens und das unbeabsichtige Herausziehen weiter minimiert.

Die Verbindung ist vorzugsweise als Verbindungssteg ausgebildet, wobei der Verbindungssteg je nach Ausbildung des Laschenelementes quer zur Mittelachse oder parallel zur Mittelachse verlaufen kann.

Vorzugsweise ist das Laschenelement als Bogen ausgebildet, der sich um einen Bogenwinkel um die Mittelachse von einem ersten Bogenende zu einem zweiten Bogenende erstreckt. Die genannten Bogenenden sind dabei fest am Frontabschnitt angeformt. Der Bogen zwischen den Bogenenden ist vom Frontabschnitt wegbiegbar.

Die genannte mindestens Verbindung mit der Sollbruchstelle liegt am Bogen des Laschenelements zwischen den beiden Bogenenden. Die Verbindung verbindet den Bogen mit dem Frontabschnitt.

Vorzugsweise weist der Bogenwinkel des Bogens zwischen den beiden genannten Bogenenden einen Winkel im Bereich von 180° bis 360°, insbesondere einen Winkel im Bereich von 240° bis 330°, auf.

Vorzugsweise ist der Aussendurchmesser des Bogens möglichst gross gewählt, wobei der Aussendurchmesser aber nicht grösser als der Aussendurchmesser des mindestens einen Rückhalteelements ist; oder wobei der Aussendurchmesser aber nicht grösser ist, als 1,1 Mal der Aussendurchmesser des mindestens einen Rückhalteelements. Der Bogen kann aber, insbesondere bei grossen Rohrdurchmessern, auch kleiner gewählt sein.

Weiter ist der Aussendurchmesser des Bogens möglichst gross gewählt, wobei dieser aber nicht oder nur in einem geringen Mass über einen geometrischen Hüllzylinders hervorsteht, der durch den Aussendurchmesser des Rohrs definiert ist. In einer anderen Variante kann der Bogen abschnittsweise oder als solches über den besagten Hüllzylinder herausragen. Es gibt hier bezüglich des Rohrs einen seitlichen Überstand. Dies hat den Vorteil, dass ein Fitting nicht montiert werden kann, wenn der Verschlussstopfen noch im Rohr sitzt. Vorzugsweise sind die Bereiche, welche seitlich über den Hüllzylinder hervorstehen, leicht flexibel ausgebildet. Durch die flexible Ausbildung des Überstandes wird bei der Entbündelung eines Rohrbündels verhindert, dass der Verschlusstopfen aus dem Rohr herausgezogen wird.

Durch die möglichst grosse Ausbildung des Aussendurchmessers des Bogens ergeht der Vorteil, dass dem Installateur ein Laschenelement bereitgestellt wird, welches gut ergriffen werden kann.

Vorzugsweise weist der Verschlussstopfen eine Anschlagsfläche auf, mit welcher der Verschlussstopfen an einer Frontfläche des Rohrs anschlägt. Vorzugsweise ist die Anschlagsfläche als eine um die Mittelachse umlaufende Ringfläche ausgebildet.

Vorzugsweise weist der Frontabschnitt mindestens eine quer zur Mittelachse verlaufende Verstärkungsrippe auf. Die Verstärkungsrippe kann Teil der Stirnfläche sein oder die Stirnfläche bereitstellen. Mit der Verstärkungsrippe kann die Festigkeit des Verschlussstopfens erhöht werden. Dies insbesondere gegen Kräfte, die den Verschlussstopfen in das Rohr eindrücken könnten.

Vorzugsweise erstreckt sich die mindestens eine Verstärkungsrippe von der Mittelachse her gesehen in den Bereich der Anschlagsfläche hinein. Vorzugsweise liegt die mindestens eine Verstärkungsrippe unterhalb des Laschenelements. Vorzugsweise liegt das Laschenelement an den Verstärkungsrippen an. Diese Merkmale erhöhen die Festigkeit des Verschlussstopfens weiter.

Die Ausdrucksweise "anliegen" ist so zu verstehen, dass das Laschenelement an der Verstärkungsrippe vorzugsweise lose anliegt.

Eine Anordnung umfasst ein Rohr und einen Verschlussstopfen nach obiger Beschreibung, wobei wenn der Verschlussstopfen mit dem Rohr in Verbindung steht, der Stopfenabschnitt in das Rohr einragt und der Frontabschnitt mit dem Laschenelement im Wesentlichen innerhalb oder nur in einem geringen Masse ausserhalb eines geometrischen Hüllzylinders liegt, der durch den Aussendurchmesser des Rohrs definiert ist. Dadurch, dass der Frontabschnitt im besagten Hüllzylinder ist, ergeht der Vorteil, dass der Verschlussstopfen bei einer Relativverschiebung eines Rohrs in einem Rohrbündel nicht aus dem Rohr hinaus gedrückt werden kann.

Die Ausdrucksweise in einem geringen Mass ausserhalb ist so zu verstehen, dass sich der Frontabschnitt nur über wenige Millimeter, beispielsweise über maximal 1 bis 10 Millimetern über den Hüllzylinder radial nach aussen erstreckt.

Zudem ergeht der Vorteil, dass die Angriffsfläche für ein mögliches Einhaken massiv kleiner wird, wodurch der Verschlussstopfen insgesamt sicherer im Rohr gelagert wird.

In einer Alternative stehen Teile des Laschenelements über einen geometrischen Hüllzylinders seitlich hervor, derart, dass ein Fitting bei eingesetztem Stopfen nicht aufsetzbar ist.

Das Laschenelement ist derart am Verschlussstopfen angeordnet, dass wenn der Verschlussstopfen mit dem Rohr in Verbindung steht, das Laschenelement von aussen her frei zugänglich ist.

Vorzugsweise liegt das mindestens eine Rückhalteelement an der Rohrinnenseite an, wobei das Rückhalteelement beim Einsetzen des Stopfenabschnitts in das Rohr derart deformiert werden, dass der Stopfenabschnitt kraftschlüssig im Rohr gehalten wird. Vorzugsweise stellt das mindestens eine Rückhalteelement eine Haltekraft gegen die Auszugsrichtung bereit, wobei das Laschenelement derart dimensioniert ist, dass dieses eine Kraft, die mindestens der Haltekraft entspricht, ohne Versagen aushält.

Hierdurch wird sichergestellt, dass das Verschlussstopfen in jedem Fall über das Laschenelement aus dem Rohr hinausgezogen werden kann, weil ein mechanisches Brechen oder gar an Abreissen des Laschenelementes vermieden werden kann.

Für die Markierung wird beispielsweise ein Markierstift eingesetzt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Verschlussstopfens für eine Ausführungsform der vorliegenden Erfindung in einem vom zu verschliessenden Rohr getrennten Zustand;
- Fig. 2: der Verschlussstopfen nach Figur 1, wobei sich ein Laschenelement in der Ausgangslage befindet;
- Fig. 3: der Verschlussstopfen nach Figur 1 und 2, wobei sich das Laschenelement in der Betätigungslage befindet;
- Fig. 4: eine Seitenansicht des Verschlussstopfens nach den vorhergehenden Figuren, wobei der Verschlussstopfen nicht im Rohr eingesetzt ist;
- Fig. 5: die Seitenansicht nach Figur 4, wobei der Verschlussstopfen in das Rohr eingesetzt ist;
- Fig. 6: eine Seitensicht der Figur 5;
- Fig. 7: eine weitere Ansicht des Verschlusstopfens nach den vorhergehenden Figuren in einem Rohr zusammen mit einem Rohrfitting;
- Fig. 8: eine perspektivische Ansicht des Verschlussstopfens nach einer der vorhergehenden Figuren mit einer Markierungslehre;
- Fig. 9: eine weitere perspektivische Ansicht der Figur 8, wobei der Verschlussstopfen am Rohr zum Anbringen einer Markierung mit der Markierungslehre angebracht ist;
- Fig. 10: eine weitere perspektivische Ansicht der Figur 8, wobei der Verschlussstopfen am Rohr zum Anbringen einer Markierung mit der Markierungslehre angebracht ist;
- Fig. 11: eine weitere Ausführungsform des Verschlussstopfens mit einer Weiterbildung des Laschenelements;
- Fig. 12: eine weitere Ausführungsform des Verschlussstopfens mit einer Weiterbildung der Markierungslehre;
- Fig. 13: eine weitere Ausführungsform des Verschlussstopfens mit einer Weiterbildung der Markierungslehre; und
- Fig. 14: eine weitere Ausführungsform des Verschlussstopfens mit einer Weiterbildung der Markierungslehre.

### BESCHREIBUNG BEVORZUGTER AUSFÜHRUNGSFORMEN

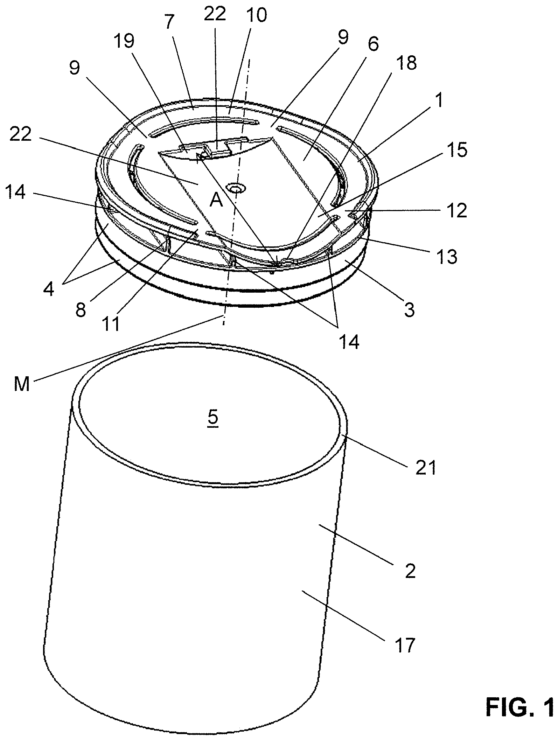

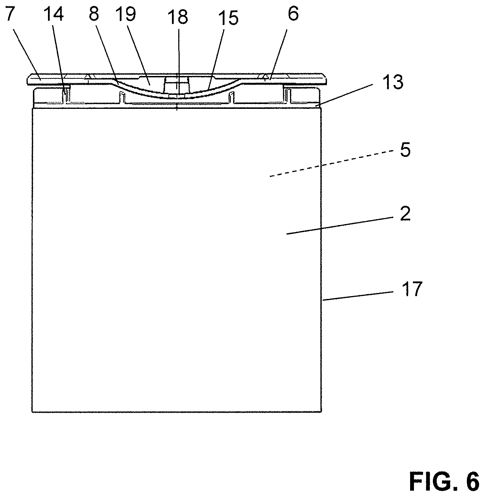

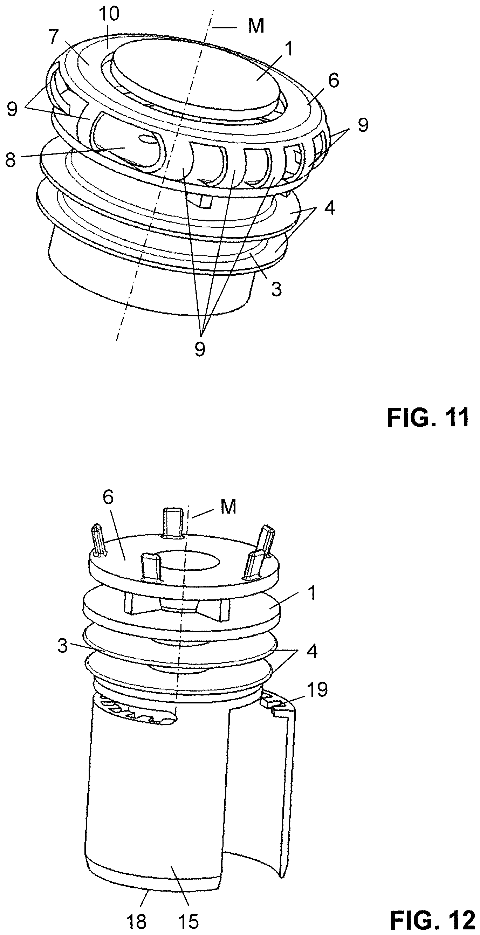

In den Fig. 1 bis 10 werden verschiedene Ansichten einer Ausführungsform eines Verschlussstopfens 1 gezeigt. Die Fig. 11 bis 14 zeigen weitere Ausführungsformen des Verschlussstopfens 1. Allen Einführungsformen ist gemeinsam, dass der Verschlussstopfens 1 zum Verschliessen eines Rohrs 2 dient. Dabei wird der Verschlussstopfen 1 in das Rohr 2 eingesetzt und der Rohrinnenraum des Rohrs 2 wird durch den Verschlussstopfen 1 dicht verschlossen.

Der Verschlussstopfen 1 umfasst in allen Ausführungsformen einen sich über eine Mittelachse M herumerstreckenden Stopfenabschnitt 3 mit mindestens einem Rückhalteelement 4. Der Stopfenabschnitt 3 ragt im mit dem Rohr 2 verbundenen Zustand in das Rohr 2 ein. Mit dem mindestens einen Rückhalteelement 4 wird eine kraftschlüssige Verbindung zwischen Verschlussstopfen 1 und der Rohrinnenseite bereitgestellt. Der Verschlussstopfen 1 wird über diese kraftschlüssige Verbindung zum Rohr 2 entsprechend gesichert, kann nicht aus dem Rohr 2 herausfallen, sondern nur bei entsprechender Kraftanwendung aus dem Rohr 2 herausgezogen werden.

Der Verschlussstopfen 1 für die vorliegende Erfindung kann gemäss den unten genannten Weiterbildungen verschiedene weitere Elemente aufweisen. Gemäss einer ersten Weiterbildung umfasst der Verschlussstopfen ein Laschenelement und eine Markierungslehre. Gemäss einer zweiten Weiterbildung umfasst der Verschlussstopfen die Markierungslehre, nicht aber das Laschenelement. In der Folge werden nun verschiedene Ausführungsformen mit dem Laschenelement und der Markierungslehre gemäss der ersten Weiterbildung genauer erläutert. Die Erläuterung beziehen sich aber auch auf die zweite Weiterbildung nur mit der Markierungslehre, das heisst ohne dem Laschenelement.

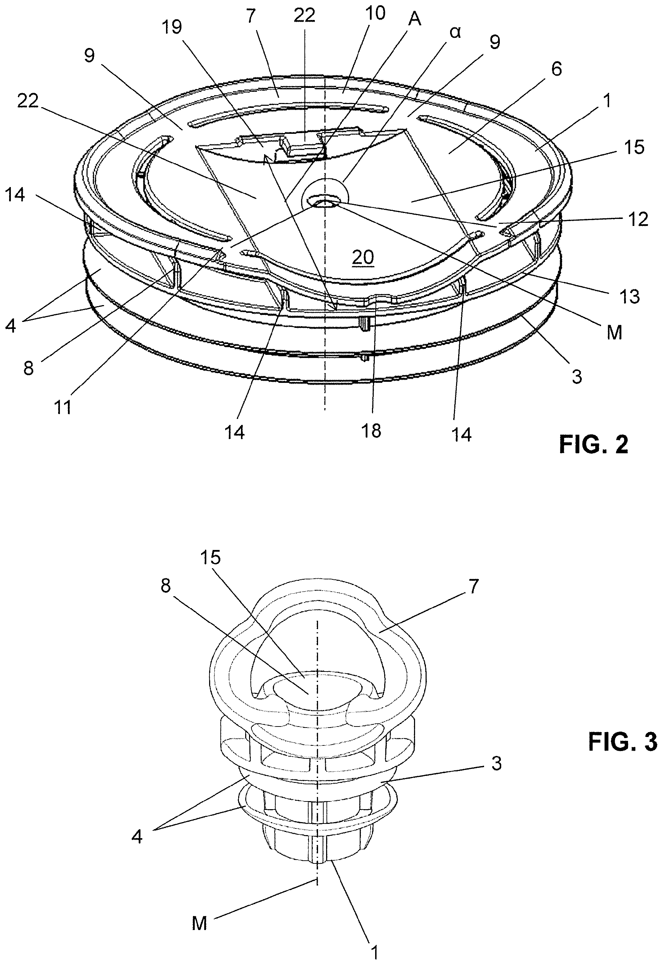

In der Folge wird nun das Laschenelement 7 detailliert beschrieben. Das Laschenelement 7 ist Teil eines Frontabschnitts 6. Das Laschenelement 7 ist, wenn der Verschlussstopfen 1 in das Rohr 2 eingesetzt ist, frei zugänglich. Das Laschenelement 7 ist dabei derart zugänglich, dass das Laschenelement 7 durch einen Installateur ergreifbar ist und dass der Verschlussstopfen 1 mit dem Laschenelement 7 aus dem Rohr 2 herausziehbar ist. Über das Laschenelement 7 wird eine Auszugskraft auf den Verschlussstopfen 1 aufgebracht. In der Fig. 2 wird der Verschlussstopfen 1 in einer perspektivischen Ansicht gezeigt. Das Laschenelement 7 liegt dabei in der Ausgangslage. In der Ausgangslage liegt das Laschenelement 7 an einer Stirnfläche 8 des Frontabschnitts 6 an. Von der Ausgangslage kann das Laschenelement 7 durch den Installateur in die Betätigungslage gebracht werden. In der Fig. 3 wird das Laschenelement 7 in der Betätigungslage gezeigt. In der Betätigungslage kann das Laschenelement 7 durch den Installateur gut ergriffen werden und der Verschlussstopfen 1 kann aus dem Rohr 2 herausgezogen werden. In der Betätigungslage ragt das Laschenelement 7 von der Stirnfläche 8 weg. Das Laschenelement 7 ist, mit anderen Worten gesagt, von der Ausgangslage in die Betätigungslage von der Stirnfläche 8 wegbiegbar.

Anhand der Fig. 2 werden nun weitere Detailmerkmale des Laschenelements 7 genauer erläutert. Das Laschenelement 7 steht über mindestens eine mit einer Sollbruchstelle ausgebildeten Verbindung 9 mit dem Frontabschnitt 8 in Verbindung. In der gezeigten Ausführungsform sind zwei Verbindungen 9 angeordnet. Die Sollbruchstelle der Verbindung 9 ist vor dem Herausziehen des Verschlussstopfen 1 durch den Installateur auftrennbar. Bei aufgetrennter Sollbruchstelle kann das Laschenelement 7 dann von der Ausgangslage, in der Fig. 2 gezeigt, in die Betätigungslage, in der Fig. 3 gezeigt, vom Frontabschnitt 6 weggebogen werden.

Das Laschenelement 7 ist als Bogen 10 ausgebildet. Der Bogen 10 erstreckt sich um einen Bogenwinkel α um die Mittelachse M von einem ersten Bogenende 11 zu einem zweiten Bogenende 12. Die genannten Bogenenden 11, 12 sind fest am Frontabschnitt angeformt. Über diese Anformung wird die Kraft vom Laschenelement 7 auf dem Verschlussstopfen 2 beim Vorgang des Herausziehens übertragen. Der Bogen 10 ist als Ganzes vom Frontabschnitt 6 wegbiegbar.

Die mindestens eine Verbindung 9 mit der Sollbruchstelle liegt am Bogen 10 des Laschenelements 7 zwischen den beiden Bogenenden 11, 12. Hier liegen die Verbindungen 9 in gleichmässigen Abständen zueinander zwischen den Bogenenden 11, 12.

Der Bogenwinkel α des Bogens 10 zwischen den beiden genannten Bogenenden 11, 12 weist einen Winkel im Bereich von 240 Grad bis 330 Grad auf. Je grösser der Winkel, desto grösser ist die Lasche und desto einfacher wird dem Installateur das Ergreifen der Lasche gemacht.

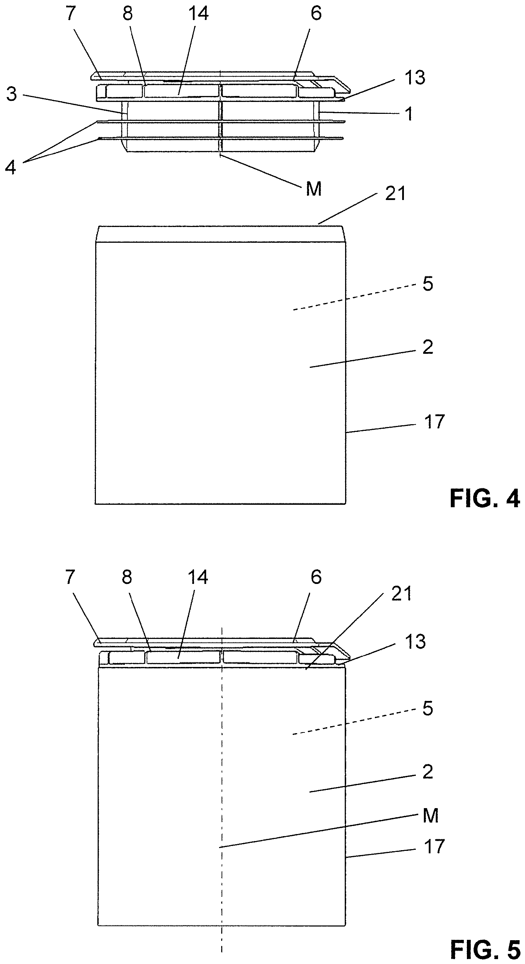

Die Fig. 4, 5 und 6 zeigen Ansichten rechtwinklig auf die Mittelachse M des Rohrs 2. Der Aussendurchmesser D10 des Bogens 10 ist möglichst gross gewählt. Der Aussendurchmesser D10 des Bogens 10 ist aber vorzugsweise so gewählt, dass das Laschenelement 2 vollständig innerhalb eines geometrischen Hüllzylinders liegt, der durch den Aussendurchmesser des Rohrs 2 definiert wird bzw. dass das Laschenelement 2 nur unwesentlich aus dem geometrischen Hüllzylinders herausragt. Mit anderen Worten definiert ist der Aussendurchmesser des Bogens 10 nicht grösser als der Aussendurchmesser D4 des mindestens einen Rückhalteelementes 4 oder der Aussendurchmesser D10 ist nicht grösser als 1,1 Mal der Aussendurchmesser D4 des mindestens einen Rückhalteelements 4. Mathematisch ausgedrückt: D10=1.1xD4. Mit anderen Worten gesagt, ist der Verschlussstopfen 1 mit dem Frontabschnitt 6 derart ausgebildet, dass dieser nicht oder nur unwesentlich radial über den maximalen Aussendurchmesser des Rohrs 2 hervorragt.

Der Verschlussstopfen weist weiterhin eine Anschlagsfläche 13 auf, mit welcher der Verschlussstopfen 1 an der Frontfläche 21 des Rohrs 2 anschlägt. Die Anschlagsfläche 13 des Verschlussstopfens 1 ist eine Ringfläche, die um die Mittelachse M umläuft. Die Anschlagsfläche 13 ist dabei Teil des Frontabschnitts 6.

Weiter weist der Frontabschnitt 6 mindestens eine quer zur Mittelachse M verlaufende Verstärkungsrippe 14 auf. In der gezeigten Ausführungsform sind im Frontabschnitt 6 mehrere quer zur Mittelachse M und parallel zueinander verlaufende Verstärkungsrippe 14 angeordnet. Die Verstärkungsrippe 14 erstrecken sich dabei von der Mittelachse M her gesehen bis in den Bereich der Anschlagsfläche 13 hinein. Weiter sind die Verstärkungsrippen 14 in der gezeigten Ausführungsform unterhalb des Laschenelements 7 angeordnet. Das Laschenelement 7 liegt in der Ausgangslage an der mindestens eine Verstärkungsrippe 14 an.

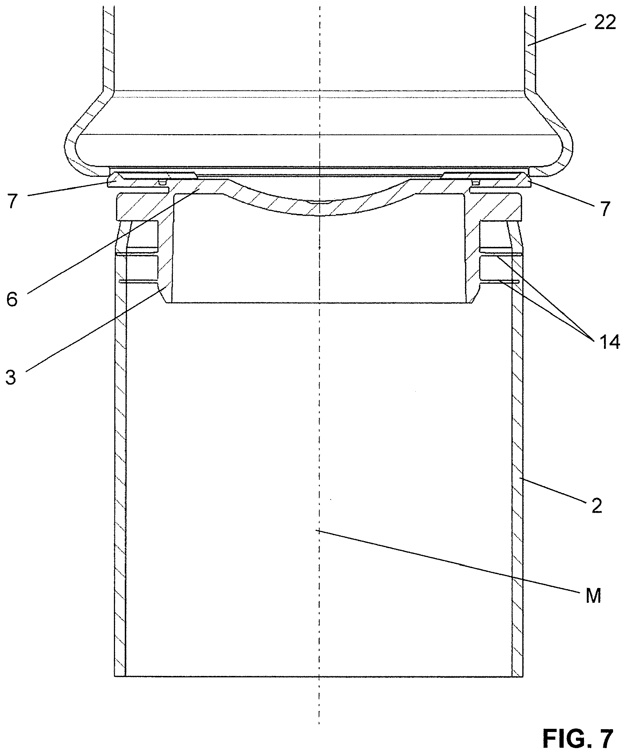

In der Fig. 7 wird eine Variante gezeigt, bei welcher das Laschenelement 7 einen leicht grösseren Durchmesser als der Aussendurchmesser des Rohrs 2 aufweist. Hierdurch wird verhindert, dass ein Fitting 23 bei eingesetztem Verschlussstopfen auf des Rohr 2 aufgesetzt werden kann.

In der Fig. 11 wird eine weitere Ausführungsform des Laschenelements 7gezeigt. Hier erstreckt sich die Aufreisslasche als Bogen um 360 Grad um die Mittelachse M herum. Die Verbindung 9 mit der Sollbruchstelle ist hier ebenfalls am Bogen angeformt und erstreckt sich im Wesentlichen in Richtung der Mittelachse M.

In der Folge wird nun die Markierungslehre 15 detailliert beschrieben. In den Fig. 1 bis 10 wird eine erste Ausführungsform der Markierungslehre 15 gezeigt. Der Verschlussstopfen 1 weist demgemäss eine Markierungslehre 15 auf, mit welcher eine Markierung 16 an der Rohraussenseite 17 anbringbar ist. Die Markierung 16 dient insbesondere für die Markierung einer Einstecktiefe eines Fittings, Dem Installateur wird durch die Markierung 16 angezeigt, wie weit er das Rohr in ein Fitting einzuschieben hat, sodass die Verpressung zwischen Fitting und Rohr optimal ist.

Die Markierungslehre 15 weist in der gezeigten Ausführungsform Anzeichnungskante 18, hier in der Form einer Anzeichnungsöffnung 18 auf, die Anzeichnungsöffnung 18 ist dabei derart ausgebildet, dass eine Stiftspitze eines Anzeichnungsstiftes in der Anzeichnungsöffnung 18 positionierbar ist. Weiter weist die Markierungslehre 15 eine Anschlagsfläche 19 auf, mit welcher die Markierungslehre 15 an die Frontfläche 21 des Rohrs 2 anlegbar ist. Die Anschlagsfläche 19 liegt in einem Abstand A beanstandet zur Anzeichnungsöffnung 18.

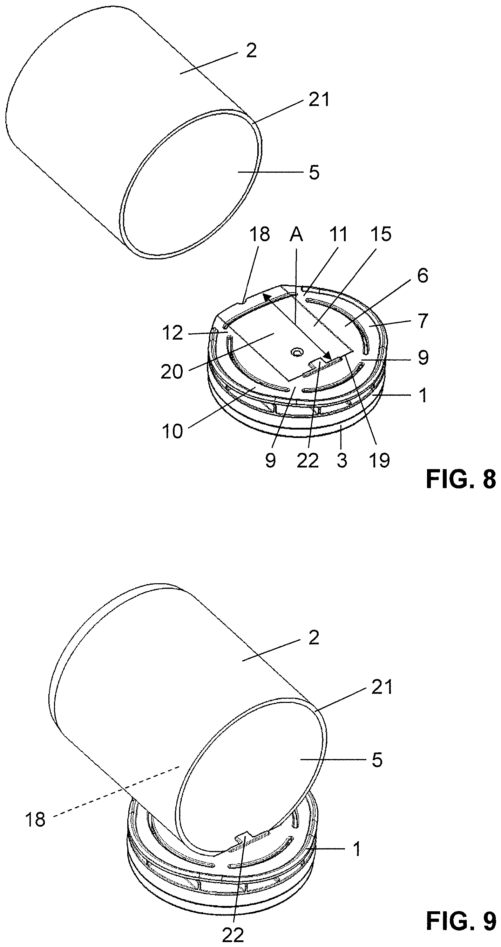

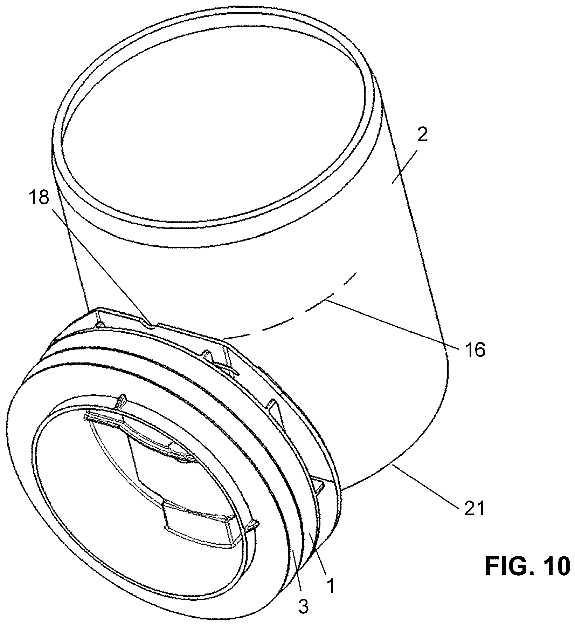

In der Fig. 8 wird der Verschlussstopfen 1 kurz vor dem Aufsetzten auf das Rohr 2 für den Vorgang des Anzeichnens getrennt vom Rohr 2 dargestellt. In der Fig. 9 und in der Fig. 10 liegt der Verschlussstopfen 1 in der Position, in welcher das Anzeichnen der Markierung möglich ist. Die Anzeichnungsöffnung 18 liegt hier an der Rohraussenseite 17 und ein Stift kann entsprechend in die Anzeichnungsöffnung 18 positioniert werden. Anschliessend kann der Verschlussstopfen 1 mindestens teilweise um die Mittelachse des Rohrs herumgeführt werden, wobei die Anschlagsfläche 19 in steten Kontakt mit der Frontfläche 21 des Rohrs bleiben soll. Hierdurch kann eine Markierung 16, wie in der Fig. 10 gezeigt, an die Rohraussenseite 17 angebracht werden.

In der gezeigten Ausführungsform erstreckt sich von der Anschlagsfläche 19 eine Führungsnocke 22 ab. Die Führungsnocke 22 ist beim Vorgang des Anbringens der Markierung mit der Rohrinnenseite 5 in Kontakt bringbar. Dies wird in der Fig. 9 gezeigt. Die Führungsnocke 22 ragt dabei in den Innenraum des Rohrs 2 ein. Mit der Führungsnocke 22 kann sichergestellt werden, dass der Verschlussstopfen 1 beim Vorgang der Markierung nicht von der Frontfläche 21 des Rohrs 2 abrutschen kann.

Weiter weist die Markierungslehre 15 eine Führungsfläche 20 auf, mit welcher die Markierungslehre 15 an der Rohraussenseite 17 anlegbar ist. Die Führungsfläche 20 ist in der gezeigten Ausführungsform konkav gerundet ausgebildet und weist vorzugsweise einen Radius auf, welche dem Radius des zu markierenden Rohrs entspricht. Mit anderen Worten gesagt, ist der Radius der konkaven Führungsfläche 20 im Wesentlichen gleich mit dem Radius der Rückhalteelemente 4 oder leicht grösser als der Radius der Rückhalteelemente 4.

In der gezeigten Ausführungsform gemäss den Figuren 1 bis 10 ist die Markierungslehre im Bereich der Frontfläche 13 angeordnet. In den Ausführungsformen nach den Figuren 12 bis 14 werden weitere Varianten des Markierungslehre 15 gezeigt. Diesen Ausführungsformen ist gemeinsam, dass die Markierungslehre 15 sich dem Stopfenabschnitt 3 anschliesst oder Teil des Stopfenabschnittes 3 ist.

Gemäss der Fig. 12 ist die Markierungslehre 15 als flexible Wand ausgebildet. Die flexible Wand umfasst dabei eine Anschlagsfläche 19, welche radial nach innen steht. Die Anzeichnungskante 18 wird durch die Endkante dieser flexiblen Wand bereitgestellt. Frontseitig weist der Verschlusstopfen hier Anschlagsstege auf, welche bei eingesetztem Verschlussstopfen ein aufsetzen eines Fittings verhindert.

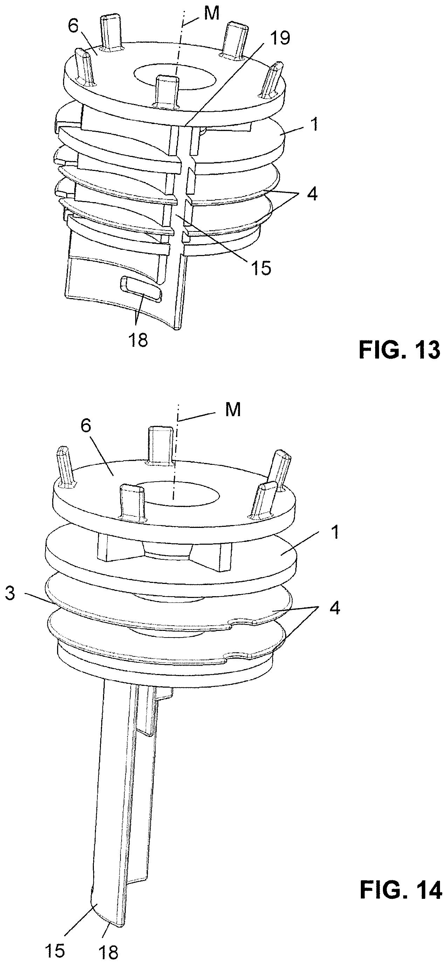

In der Fig. 13 erstreckt sich die Markierungslehre in den Stopfenabschnitt 3 hinein. Die Markierungslehre 15 ist Teil des Stopfenabschnitts 3. Hier weist die Markierungslehre die Gestalt eines konkav gerundeten Schlitzes auf, welche die Wand entsprechend aufnimmt.

In der Fig. 14 wird eine weitere Ausführungsform der Markierungslehre 15 gezeigt. Hier erstreckt sich die Markierungslehre 15 als Führungswand vom Stopfenabschnitt 3 weg.

### BEZUGSZEICHENLISTE

| | | | |
|---|---|---|---|
| 1 | Verschlussstopfen | 16 | Markierung |
| 2 | Rohr | 17 | Rohraussenseite |
| 3 | Stopfenabschnitt | 18 | Anzeichnungskante |
| 4 | Rückhalteelement | 19 | Anschlagsfläche |
| 5 | Rohrinnenseite | 20 | Führungsfläche |
| 6 | Frontabschnitt | 21 | Frontfläche |
| 7 | Laschenelement | 22 | Führungsnocke |
| 8 | Stirnfläche | 23 | Fitting |
| 9 | Verbindung mit Sollbruchstelle | α | Bogenwinkel |
| 10 | Bogen | A | Abstand |
| 11 | erstes Bogenende | M | Mittelachse |
| 12 | zweites Bogenende | | |
| 13 | Anschlagsfläche | | |
| 14 | Verstärkungsrippe | | |
| 15 | Markierungslehre | | |

## Patentansprüche

1. Verfahren zum Anbringen einer Markierung auf der Rohraussenseite eines Rohrs mit einem Verschlussstopfen (1) zum Verschliessen des Rohrs (2), wobei der Verschlussstopfen (1)
einen sich um eine Mittelachse (M) herumerstreckenden Stopfenabschnitt (3) mit mindestens einem Rückhalteelement (4), welcher Stopfenabschnitt (3) im mit dem Rohr (2) verbundenen Zustand in das Rohr (2) einragt, wobei mit dem mindestens einen Rückhalteelement (4) eine kraftschlüssige Verbindung zwischen Verschlussstopfen (1) und der Rohrinnenseite (5) bereitstellbar ist, und
eine Markierungslehre (15), mit welcher eine Markierung (16), insbesondere für die Einstecktiefe eines Fittings, an der Rohraussenseite (17) anbringbar ist, umfasst, wobei in einem ersten Schritt der Verschlussstopfen (1) aus dem Rohr (2) herausgezogen wird, wobei in einem nachfolgenden Schritt der Verschlussstopfen (1) mit der Markierungslehre (15) am Rohr positioniert wird, und wobei in einem nachfolgenden Schritt eine Markierung basierend auf der Markierungslehre (15) angebracht wird.

2. Verfahren nach Anspruch 1, **dadurch gekennzeichnet, dass** die Markierungslehre (15) eine Anzeichnungskante (18) aufweist, wobei die Anzeichnungskante (18) derart ausgebildet ist, dass eine Stiftspitze an der Anzeichnungskante (18) positionierbar ist.

3. Verfahren nach Anspruch 2, **dadurch gekennzeichnet, dass** die Markierungslehre (15) eine Anschlagsfläche (19) aufweist, mit welcher die Markierungslehre (15) an die Frontfläche (21) des Rohrs (2) anlegbar ist, wobei die Anschlagsfläche (19) in einem Abstand (A) beabstandet zur Anzeichnungskante (18) liegt.

4. Verfahren nach Anspruch 3, **dadurch gekennzeichnet, dass** von der Anschlagsfläche (19) eine Führungsnocke (22) absteht, welche beim Vorgang der Markierung mit der Rohrinnenseite (5) in Kontakt bringbar ist.

5. Verfahren nach einem der Ansprüche 1 bis 4, **dadurch gekennzeichnet, dass** die Markierungslehre (15) eine Führungsfläche (20) aufweist, mit welcher die Markierungslehre (15) an der Rohraussenseite (17) anlegbar ist, wobei die Führungsfläche (20) vorzugsweise konkav gerundet ist.

6. Verfahren nach einem der vorhergehenden Ansprüche 1 bis 5, **dadurch gekennzeichnet, dass** die Markierungslehre (15) im Bereich des Frontabschnitts (6) angeordnet ist; oder dass die Markierungslehre (15) sich dem Stopfenabschnitt (3) anschliesst; oder dass die Markierungslehre (15) Teil des Stopfenabschnittes (3).

7. Verfahren nach einem der vorhergehenden Ansprüche 1 bis 6, **dadurch gekennzeichnet, dass** der Verschlussstopfen (1) einen Frontabschnitt (6) mit einem Laschenelement (7) aufweist, wobei das Laschenelement (7) im mit dem Rohr (2) verbundenen Zustand frei zugänglich ist, derart, dass das Laschenelement (7) durch einen Installateur ergreifbar ist und dass der Verschlussstopfen (1) mit dem Laschenelement (7) aus dem Rohr (2) herausziehbar ist.

8. Verfahren nach Anspruch 7, **dadurch gekennzeichnet, dass** das Laschenelement (7) von einer Ausgangslage, in welcher das Laschenelement (7) an einer Stirnfläche (8) des Frontabschnitts (6) anliegt, in eine Betätigungslage, in welcher das Laschenelement (7) von der Stirnfläche (8) wegragt, wegbiegbar ist.

9. Verfahren nach Anspruch 7 oder 8, **dadurch gekennzeichnet, dass** das Laschenelement (7) über mindestens einen mit einer Sollbruchstelle ausgebildeten Verbindung (9) mit dem Frontabschnitt (8) verbunden ist, wobei die Sollbruchstelle (9) vor dem Herausziehen des Verschlussstopfens (1) auftrennbar ist.

10. Verfahren nach einem der vorhergehenden Ansprüche 7 bis 9, **dadurch gekennzeichnet, dass** das Laschenelement (7) als Bogen (10) ausgebildet ist, der sich vorzugsweise um einen Bogenwinkel (α) um die Mittelachse (M) von einem ersten Bogenende (11) zu einem zweiten Bogenende (12) erstreckt, wobei die genannten Bogenenden (11, 12) fest am Frontabschnitt (6) angeformt sind und wobei der Bogen (10) vom Frontabschnitt (6) wegbiegbar ist.

11. Verfahren nach Anspruch 9 und 10, **dadurch gekennzeichnet, dass** die mindestens eine Verbindung (9) mit der Sollbruchstelle am Bogen (10) des Laschenelements (7) zwischen den beiden Bogenenden (11, 12) liegt.

12. Verfahren nach einem der vorhergehenden Ansprüche 10 bis 12, **dadurch gekennzeichnet, dass** der Bogenwinkel (α) des Bogens (10) zwischen den beiden genannten Bogenenden (11, 12) einen Winkel im Bereich von 180° bis 360°, insbesondere in einem Winkel im Bereich von 240° bis 330°, aufweist.

13. Verfahren nach einem der vorhergehenden Ansprüche 10 bis 12, **dadurch gekennzeichnet, dass** der Aussendurchmesser (D10) des Bogens (10) möglichst gross gewählt ist, wobei der Aussendurchmesser (D10) aber nicht grösser als der Aussendurchmesser (D4) des mindestens einen Rückhalteelements (4) ist; oder wobei der Aussendurchmesser (D10) aber nicht grösser ist, als 1,1 Mal der Aussendurchmesser (D4) des mindestens einen Rückhalteelements (4)

14. Verfahren nach einem der vorhergehenden Ansprüche, **dadurch gekennzeichnet, dass** der Verschlussstopfen (1) eine Anschlagsfläche (13) aufweist, mit welcher der Verschlussstopfen (1) an einer Frontfläche (21) des Rohrs (2) anschlägt, wobei die Anschlagsfläche (13) vorzugsweise als um die Mittelachse (M) umlaufende Ringfläche ausgebildet ist.

15. Verfahren nach einem der vorhergehenden Ansprüche, **dadurch gekennzeichnet, dass** der Frontabschnitt (6) mindestens eine quer zur Mittelachse (M) verlaufende Verstärkungsrippe (14) aufweist.

16. Verfahren nach einem der vorhergehenden Ansprüche 14 und 15, **dadurch gekennzeichnet, dass** sich die mindestens eine Verstärkungsrippe (14) von der Mittelachse (M) her gesehen in den Bereich der Anschlagsfläche (13) hinein erstreckt, und/oder dass die mindestens eine Verstärkungsrippe (14) unterhalb des Laschenelements (7) liegt und/oder dass das Laschenelement (7) an der mindestens einen Verstärkungsrippe (14) anliegt.

17. Verwendung eines Verschlussstopfens zum Anbringen einer Markierung auf der Rohraussenseite eines Rohrs, wobei der Verschlussstopfen (1) einen sich um eine Mittelachse (M) herumerstreckenden Stopfenabschnitt (3) mit mindestens einem Rückhalteelement (4), welcher Stopfenabschnitt (3) im mit dem Rohr (2) verbundenen Zustand in das Rohr (2) einragt, wobei mit dem mindestens einen Rückhalteelement (4) eine kraftschlüssige Verbindung zwischen Verschlussstopfen (1) und der Rohrinnenseite (5) bereitstellbar ist, und
eine Markierungslehre (15), mit welcher eine Markierung (16), insbesondere für die Einstecktiefe eines Fittings, an der Rohraussenseite (17) anbringbar ist, umfasst.

18. Verwendung nach Anspruch 17 mit einem Verfahren nach den Ansprüchen 1 bis 16.

## Claims

1. Method for applying a mark on the exterior surface of a pipe with a closing plug (1) for closing the pipe (2), wherein the closing plug (1)
comprises a plug section (3) extending around a center axis (M) and comprising at least one retention element (4), wherein said plug section (3), in a state in which it is connected to the pipe, projects into the pipe, wherein a force-fit connection between the closing plug (1) and the interior surface (5) of the pipe is provided by means of the at least one retention element (4), and
comprises a marking gauge (15) by means of which a mark (16), especially for the insertion depth of a fitting, can be applied to the exterior surface (17) of the pipe, wherein in a first step the closing plug (1) is pulled out of the pipe (2), wherein in a subsequent step the closing plug (1) is positioned with the marking gauge (15) on the pipe, and wherein in a subsequent step a marking is applied based on the marking gauge (15).

2. . Method according to claim 1, **characterized in that** the marking gauge (15) comprises a marking edge (18), wherein the marking edge (18) is formed such that a tip of a pen can be positioned on the marking edge (18).

3. . Method according to claim 2, **characterized in that** the marking gauge (15) comprises a stop surface (19), by which the marking gauge (15) can be positioned on the front surface (21) of the pipe (2), wherein the stop surface (19) is located at a distance (A) with respect to the marking edge (18).

4. . Method according to claim 3, **characterized in that** from the stop surface (19) a guiding cam (22) projects, which can be brought into contact with the interior surface (5) of the pipe during the process of marking

5. . Method according to one of claims 1 to 4, **characterized in that** the marking gauge (15) comprises a guide surface (20), by means of which the marking gauge (15) can be positioned on the exterior surface (17) of the pipe, wherein the guide surface (20) preferably is rounded in a concave manner.

6. . Method according to one of the preceding claims 1 to 5, **characterized in that** the marking gauge (15) is arranged in the region of the front section (6); or that the marking gauge (15) adjoins the plug section (3); or that the marking gauge (15) forms part of the plug section (3).

7. . Method according to one of the preceding claims 1 to 6, **characterized in that** the closing plug (1) comprises a front section (6) with a lug element (7), wherein the lug element (7), in a state in which it is connected to the pipe (2), is freely accessible, such that the lug element (7) can be gripped by an installer and that the closing plug (1) can be pulled out of the pipe (2) by means of the lug element (7)

8. . Method according to claim 7, **characterized in that** the lug element (7) can be deflected from a starting position, in which the lug element (7) abuts against a front surface (8) of the front section (6), into a actuation position, in which the lug element (7) projects away from the front surface (8)

9. . Method according to claim 7 or 8, **characterized in that** the lug element (7) is connected to the front section (8) via at least one connection (9) comprising a predetermined breaking point, wherein the predetermined breaking point (9) is breakable prior to pulling out the closing plug (1).

10. . Method according to one of the preceding claims 7 to 9, **characterized in that** the lug element (7) is formed as an arc (10), which preferably extends about an arc angle (α) around the center axis (M) from a first end (11) of the arc to a second end (12) of the arc, wherein said ends (11, 12) of the arc are formed onto the front section (6) in a fixed manner and wherein the arc (10) can be deflected from the front section (6).

11. . Method according to claim 9 and 10, **characterized in that** the at least one connection (9) with the predetermined breaking point is located at the arc (10) of the lug element (7) between the two ends (11, 12) of the arc.

12. . Method according to one of the preceding claims 10 to 12, **characterized in that** the arc angle (α) of the arc (10) comprises between said two ends (11, 12) of the arc an angle in the range of 180° to 360°, preferably an angle in the range of 240° to 330°.

13. . Method according to one of the preceding claims 10 to 12, **characterized in that** the exterior diameter (D10) of the arc (10) is selected to be especially large, wherein the exterior diameter (D10), however, is not larger than the exterior diameter (D4) of the at least one retention element (4), or wherein the exterior diameter (D10), however, is not larger than 1, 1 times the exterior diameter (D4) of the at least one retention element (4)

14. . Method according to one of the preceding claims, **characterized in that** the closing plug (1) comprises a stop surface (13) by means of which the closing plug (1) abuts against a front surface (21) of the pipe (2), wherein the stop surface (13) preferably is formed as an annular surface extending around the center axis (M).

15. . Method according to one of the preceding claims, **characterized in that** the front section (6) comprises at least one reinforcing rib (14) extending perpendicular to the center axis (M).

16. . Method according to one of the preceding claims 14 and 15, **characterized in that** the at least one reinforcing rib (14), when viewed from the center axis (M), projects into the region of the stop surface (13) and/or that the at least one reinforcing rib (14) lies below the lug element (7) and/or that the lug element (7) abuts against the at least one reinforcing rib (14).

17. . Use of a closing plug for applying a mark on the exterior surface of a pipe, wherein the closing plug (1) comprises
a plug section (3) extending around a center axis (M) and having at least one retention element (4), wherein said plug section (3), in a state in which it is connected to the pipe, projects into the pipe (2), wherein by means of the at least one retention element (4) a force-fit connection between the closing plug (1) and the interior surface (5) of the pipe can be provided, and
a marking gauge (15), by means of which a mark (16), especially for the insertion depth of a fitting, can be applied to the exterior surface (17) of the pipe

18. . Use according to claim 17, by means of a method according to claims 1 to 16.

## Revendications

1. Un procédé pour appliquer un marquage sur le côté extérieur de tuyau d'un tuyau avec un bouchon de fermeture (1) pour fermer le tuyau (2), où le bouchon (3) de fermeture (1) comprend
une section de bouchon (3) s'étendant autour d'un axe central (M) avec au moins un élément de retenue (4), laquelle section de bouchon (3) à l'état connecté au tuyau (2) s'introduit dans le tuyau (2), où une liaison de force peut être établie par l'au moins un élément de retenue (4) entre le bouchon de fermeture (1) et le côté intérieur de tuyau (5), et
une jauge de marquage (15), avec laquelle un marquage (16), en particulier pour la profondeur d'insertion d'un raccord, peut être placée sur le côté extérieur de tuyau (17), dans lequel dans une étape ultérieure, le bouchon de fermeture (1) est positionné sur le tuyau avec la jauge de marquage (15), et dans lequel dans une étape ultérieure, un marquage est réalisé sur la base de la jauge de marquage (15).

2. Le procédé selon la revendication 1, **caractérisé en ce que** la jauge de marquage (15) présente un bord de marquage (18), le bord de marquage (18) étant conçu de telle sorte qu'une pointe de stylo puisse être positionnée sur le bord de marquage (18).

3. Le procédé selon la revendication 2, **caractérisé en ce que** la jauge de marquage (15) présente une surface de butée (19), avec laquelle la jauge de marquage (15) peut être placée sur la surface avant (21) du tuyau (2), dans lequel la surface de butée (19) se trouve à une distance (A) du bord de marquage (18).

4. Le procédé selon la revendication 3, **caractérisé en ce qu'**une came de guidage (22) dépasse de la surface de butée (19), qui peut être mise en contact avec l'intérieur du tuyau (5) lors du processus de marquage.

5. Le procédé selon l'une des revendications 1 à 4, **caractérisé en ce que** la jauge de marquage (15) présente une surface de guidage (20) avec laquelle la jauge de marquage (15) peut être placée sur le côté extérieur du tuyau (17), dans lequel la surface de guidage (20) est de préférence arrondie de manière concave.

6. Le procédé selon l'une des revendications précédentes 1 à 5, **caractérisé en ce que** la jauge de marquage (15) est disposée dans la zone de la section avant (6) ; ou que la jauge de marquage (15) est adjacente à la section de bouchon (3) ; ou que la jauge de marquage (15) fait partie de la section de bouchon (3).

7. Le procédé selon l'une des revendications précédentes 1 à 6, **caractérisé en ce que** le bouchon de fermeture (1) présente une section avant (6) avec un élément de languette (7), dans lequel l'élément de languette (7) lorsqu'il est connecté au tuyau (2), est librement accessible de telle sorte que l'élément de languette (7) puisse être saisi par un installateur et que le bouchon de fermeture (1) puisse être retiré du tuyau (2) avec l'élément de languette (7).

8. Le procédé selon la revendication 7, **caractérisé en ce que** l'élément à languette (7) peut être plié d'une position initiale dans laquelle l'élément à languette (7) repose sur une face frontale (8) de la section avant (6) jusqu'à une position d'actionnement dans laquelle l'élément de languette (7) dépasse de la face frontale (8).

9. Le procédé selon la revendication 7 ou 8, **caractérisé en ce que** l'élément de languette (7) est relié à la section avant (8) par l'intermédiaire d'au moins une connexion (9) conçue avec un point de rupture prédéterminé, dans lequel le point de rupture prédéterminé (9) peut être rompu avant que le bouchon de fermeture ne soit retiré (1).

10. Le procédé selon l'une des revendications précédentes 7 à 9, **caractérisé en ce que** l'élément de languette (7) est réalisé sous forme d'arc (10), qui s'étend de préférence selon un angle d'arc (α) autour de l'axe central (M) d'une première extrémité d'arc (11) jusqu'à une deuxième extrémité d'arc (12), lesdites extrémités d'arc (11, 12) étant formées de manière fixe sur la section avant (6) et l'arc (10) pouvant être plié pour s'écarter de la section avant (6).

11. Le procédé selon les revendications 9 et 10, **caractérisé en ce que** l'au moins une liaison (9) avec le point de rupture prédéterminé sur l'arc (10) de l'élément de languette (7) se situe entre les deux extrémités d'arc (11, 12).

12. Le procédé selon l'une des revendications précédentes 10 à 12, **caractérisé en ce que** l'angle d'arc (α) de l'arc (10) présente, entre les deux dites extrémités d'arc (11, 12), un angle compris entre 180° et 360°, en particulier un angle compris entre 240° et 330°.

13. Le procédé selon l'une des revendications précédentes 10 à 12, **caractérisé en ce que** le diamètre extérieur (D10) de l'arc (10) est choisi le plus grand possible, mais dans lequel le diamètre extérieur (D10) n'est pas supérieur au diamètre extérieur (D4) de l'au moins un élément de retenue (4) ; ou dans lequel le diamètre extérieur (D10) n'est pas supérieur à 1,1 fois le diamètre extérieur (D4) de l'au moins un élément de retenue (4).

14. Le procédé selon l'une des revendications précédentes l'une des revendications précédentes, **caractérisé en ce que** le bouchon de fermeture (1) présente une surface de butée (13) avec laquelle le bouchon de fermeture (1) vient en butée sur une surface frontale (21) du tuyau (2), dans lequel la surface d'arrêt (13) est de préférence conçue comme une surface annulaire encerclant l'axe central (M).

15. Le procédé selon l'une des revendications précédentes, **caractérisé en ce que** la section avant (6) présente au moins une nervure de renfort (14) s'étendant transversalement à l'axe central (M).

16. Le procédé selon l'une des revendications précédentes 14 et 15, **caractérisé en ce que** l'au moins une nervure de renfort (14) s'étend dans la zone de la surface de butée (13) vue depuis l'axe central (M), et/ou que l'au moins une nervure de renfort (14) se situe sous l'élément de languette (7) et/ou que l'élément de languette (7) repose sur l'au moins une nervure de renfort (14).

17. Utilisation d'un bouchon de fermeture (1) pour appliquer un marquage sur le côté extérieur de tuyau d'un tuyau, dans lequel le bouchon de fermeture (1) comprend
une section de bouchon (3) s'étendant autour d'un axe central (M) avec au moins un élément de retenue (4), laquelle section de bouchon (3) à l'état connecté au tuyau (2) s'introduit dans le tuyau (2), où une liaison de force peut être établie par l'au moins un élément de retenue (4) entre le bouchon de fermeture (1) et le côté intérieur de tuyau (5), et
une jauge de marquage (15), avec laquelle un marquage (16), en particulier pour la profondeur d'insertion d'un raccord, peut être placée sur le côté extérieur de tuyau (17).

18. Utilisation selon la revendication 17, en combinaison avec un procédé selon les revendications 1 à 16.
